# EUROPÄISCHE PATENTSCHRIFT

(11) **EP 3 944 266 B1**
(45) Veröffentlichungstag und Bekanntmachung des Hinweises auf die Patenterteilung: **23.10.2024**
(21) Anmeldenummer: 21178945.8
(22) Anmeldetag: 11.06.2021
(51) Int. Cl.: H01F 7/18, F16D 65/18, F16D 121/14, F16D 121/22

(54) **STEUERUNG FÜR EINE ELEKTROMAGNETISCHE HALTEBREMSE**
CONTROL FOR AN ELECTROMAGNETIC HOLDING BRAKE
COMMANDE POUR UN FREIN DE RETENUE ÉLECTROMAGNÉTIQUE

(30) Priorität: 01.07.2020 DE 102020117349
(43) Veröffentlichungstag der Anmeldung: 26.01.2022
(73) Patentinhaber: ebm-papst St. Georgen GmbH & Co. KG, 78112 St. Georgen (DE)
(72) Erfinder: PFAFF, Andreas, 78141 Schönwald (DE); LAYES, Paul, 78052 Villingen-Schwenningen (DE); MAIER, Tobias, 78628 Rottweil (DE); FLIHS, Sebastian, 78183 Hüfingen (DE)
(74) Vertreter: Staeger & Sperling Partnerschaftsgesellschaft mbB

(56) Entgegenhaltungen:
- DE-A1- 19 533 131
- JP-A- 2002 284 463
- US-A1- 2010 301 785

## Beschreibung

Die Erfindung betrifft eine Steuerung für eine elektromagnetische Haltebremse, eine durch eine solche Steuerung gesteuerte elektromagnetische Haltebremse sowie ein Verfahren zur Steuerung einer elektromagnetischen Haltebremse mit einer solchen Steuerung.

Aus dem Stand der Technik ist eine Vielzahl von Sicherheitsbremsen mit einer jeweiligen Steuerung bekannt. Sicherheitsbremsen haben allgemein die Aufgabe, bewegte Massen oder Lasten aus der Bewegung abzubremsen bzw. im Stillstand sicher zu halten. Das Bremsmoment oder die Bremskraft wird hierbei meist über vorgespannte Federn erzeugt. Sicherheitsbremsen werden im Stand der Technik oftmals als Haltebremsen verwendet, welche in der Regel nicht zum Abbremsen der Bewegung, sondern lediglich zum Halten der Masse im Stillstand ausgelegt sind. Meist übernimmt das Abbremsen der Bewegung ein geregelter Antrieb, wobei die Sicherheits- oder Haltebremsen oftmals auch für Notbremsungen ausgelegt sind.

Eine Haltebremse muss also im normalen Betrieb die Masse bzw. Last, also beispielsweise eine Anlage oder einen Motor, der bzw. dem sie zugeordnet ist, nur im Stillstand sicher halten.

Gelüftet bzw. geöffnet werden die Bremsen zum Teil elektromagnetisch. Im energielosen Zustand sind die Bremsen geschlossen bzw. liegen die Bremsen an, so dass sie den geforderten Sicherheitsaspekten bei allen Betriebsbedingungen einschließlich Not-Aus und Stromausfall entsprechen.

Insbesondere elektromagnetische Haltebremsen weisen meist eine im gelüfteten Betrieb stromdurchflossene Spule auf, welche eine metallische Ankerplatte gegen die Kraft einer die Ankerplatte druckbeaufschlagenden Feder anzieht. Um sowohl das Lösen der Bremse selbst als auch das gelöst Halten der Bremse sicherzustellen, ist im Stand der Technik meist vorgesehen, die Spule mit einer Spannung und einem Strom zu versorgen, welche zumindest dem Wert zum Lösen der Bremse entsprechen und meist deutlich höher sind, um ein sicheres Lösen und Gelösthalten gewährleisten zu können.

Bei kompakten Antrieben, in denen elektronische Baugruppen, wie beispielsweise Getriebe, Bremse, Encoder und Leistungselektronik, integriert bzw. miteinander in eine Baugruppe zusammengefasst sind, kommt es durch unnötig hohe Betriebsspannungen der Bremse zum einen zu einem unnötig hohen Stromverbrauch der Bremse selbst und zum anderen zu einer erhöhten Wärmeentwicklung im Antrieb und somit zu Leistungseinbußen.

Steuerungen für Haltebremsen sind beispielsweise aus den Dokumenten JP 2002 284463 A und US 2010/301785 A1 bekannt.

Der Erfindung liegt deshalb die Aufgabe zugrunde, die vorgenannten Nachteile zu überwinden und eine Steuerung für eine elektromagnetische Haltebremse, eine elektromagnetische Haltebremse selbst und ein Verfahren zur Steuerung der elektromagnetischen Haltebremse bereitzustellen, durch welche ein geringer Verbrauch der Haltebremse sowie eine hohe EMV erreicht wird und es zu einer möglichst geringen Wärmeentwicklung kommt erreicht wird.

Diese Aufgabe wird durch die Merkmalskombination gemäß Patentanspruch 1 gelöst.

Erfindungsgemäß wird eine Steuerung für eine elektromagnetische Haltebremse und vorzugsweise für eine Federkraftbremse vorgeschlagen. Als Steuerung wird hierbei insbesondere die elektrische Schaltung zur Steuerung verstanden. Die Haltebremse weist eine Spule zum Lösen und Gelösthalten der Haltebremse bzw. insbesondere zum Lösen und Gelösthalten eines metallischen Ankers der Haltebremse auf, wobei die Spule zum Gelösthalten eine Mindestbremsenspulenspannung benötigt, welche beispielsweise durch die Spule, den Anker, einer den Anker druckbeaufschlagenden und von der Spule wegpressenden Feder, dem geplanten Einsatzbereich der Haltebremse oder generell der Bauform der Haltebremse beeinflusst wird bzw. von diesen Faktoren abhängt. Eine solche Mindestbremsenspulenspannung wird oftmals unmittelbar vom Bremsenhersteller vorgegeben oder ist über Versuche ermittelbar, wobei die Mindestbremsenspulenspannung das sichere Gelösthalten auch bei vorbestimmten auf die Haltebremse wirkenden Stoß- oder Schockkräften sicherstellt. Die Mindestbremsenspulenspannung ist zwar ausreichend, den Anker bzw. die Bremse gelöst bzw. gelüftet zu halten, reicht jedoch nicht aus, um die Bremse initial bzw. aus einem gebremsten Zustand zu lösen. Erfindungsgemäß ist vorgesehen, dass die Steuerung einen Gleichspannungswandler mit einem Eingang und einem Ausgang aufweist. Der Gleichspannungswandler ist ausgebildet, eine am Eingang anliegende variable Eingangsspannung in eine am Ausgang bereitgestellte vorbestimmte Einschaltspannung und eine am Ausgang bereitgestellte vorbestimmte Haltespannung umzuwandeln, welche am Ausgang vorzugsweise zeitlich versetzt zueinander bzw. ineinander übergehend bereitgestellt werden. Als variable Eingangsspannung wird hierbei insbesondere verstanden, dass die am Eingang anliegende Spannung zwischen einem Minimalwert und einem Maximalwert liegen kann. Zudem kann die variable Eingangsspannung auch im Betrieb variieren. Um ein sicheres Gelösthalten der Bremse gewährleisten zu können, entspricht die Haltespannung der Mindestbremsenspulenspannung. Die Einschaltspannung ist insbesondere vorbestimmt, ein sicheres Lösen der Haltebremse zu gewährleisten und kann beispielsweise ebenfalls vom Bremsenhersteller vorgegeben bzw. von den vorgenannten, das Gelösthalten der Haltebremse beeinflussenden Faktoren abhängig sein. Wesentlich für die Erfindung ist, dass der Gleichspannungswandler ausgebildet ist, eine 2-stufige Spannungssteuerung zu realisieren und in einer ersten Stufe die Einschaltspannung als geregelte DC-Spannung für eine vorbestimmte Zeit zu halten, die Spannung von der Einschaltspannung einem vorbestimmten Spannungsverlauf folgend auf die Haltespannung als geregelte DC-Spannung herunterzuregeln und in einer zweiten Stufe zu halten.

Dabei ergeben sich durch die erfindungsgemäßen Merkmale, also der Ausbildung des Gleichspannungswandlers die DC-Spannung dem vorbestimmten Spannungsverlauf folgend von der Einschalt- auf die Haltespannung herunterzuregeln und auf der gegenüber der Einschaltspannung niedrigeren Haltespannung zu halten, eine hohe bzw. optimierte elektromagnetischen Verträglichkeit (EMV) sowie ein hoher bzw. optimierter Wirkungsgrad.

Weiter kann eine solche erfindungsgemäße Steuerung zusätzlich bezüglich ihrer elektromagnetischen Verträglichkeit (EMV) sowie bezüglich ihres Wirkungsgrades optimiert ausgebildet sein.

Bei dem Gleichspannungswandler kann es sich beispielsweise um einen Schaltregler handeln, dessen Ausgangsspannung, welche der am Ausgang bereitgestellten Spannung entspricht, durch einen Filter oder zumindest einen Kondensator geglättet wird. Insbesondere bei der Verwendung einer Kombination aus Schaltnetzteil und Filter, kommt es bei der Umwandlung zu einer geringen Verlustleistung. Die Spannung kann daher durch den Schaltregler getaktet sein, wobei an der Bremsspule aufgrund des Filters eine ungetaktete Spannung anliegt.

Vorzugsweise ist die variable Eingangsspannung gleich oder höher als die Einschaltspannung. Ferner ist die Einschaltspannung höher als die Haltespannung. Entsprechend kann ein Hochsetzsteller als Gleichspannungswandler vermieden werden.

In einer einfachen Variante kann beispielsweise die Eingangsspannung der Einschaltspannung entsprechen, welche optional zusätzlich geglättet werden kann. Entsprechend kann die Eingangsspannung im ersten Schritt für eine vorbestimmte Zeit am Ausgang als Einschaltspannung bereitgestellt und anschließend auf die Haltespannung herabgesetzt und im zweiten Schritt gehalten werden.

Eine vorteilhafte Weiterbildung sieht vor, dass der Gleichspannungswandler ausgebildet ist, unmittelbar eine ungetaktete Spannung zu erzeugen und am Ausgang als Einschaltspannung und als Haltespannung bereitzustellen.

Eine vorteilhafte Variante sieht vor, dass die Steuerung ausschließlich einen Eingang aufweist und durch die am Eingang anliegende Eingangsspannung eine Spannungsversorgung der Steuerung und ein Steuersignal für die Steuerung bereitgestellt wird.

In einer ersten Variante kann der Übergang von dem ersten Schritt zu dem zweiten Schritt bzw. von der Einschaltspannung zu der Ausschaltspannung sprunghaft sein. Alternativ sieht eine vorteilhafte Variante vor, dass der Gleichspannungswandler ausgebildet ist, die Einschaltspannung kontinuierlich, wie beispielsweise einem linearen Verlauf folgend, auf die Haltespannung herunterzuregeln.

Um dem Kunden eine universale Schnittstelle bereitzustellen, ist bei einer vorteilhaften Weiterbildung zudem vorgesehen, dass der Eingang der Steuerung ein Weitbereichseingang ist und dadurch die variable Eingangsspannung zwischen einem Minimalwert und einem Maximalwert liegen kann. Entgegen der Eingangsspannung ist jedoch die Einschaltspannung sowie die Haltespannung jeweils ein fester vorbestimmter Wert.

Beispielsweise kann die Eingangsspannung in einem Bereich zwischen 24V und 60V liegen.

Dementsprechend ist der Gleichspannungswandler ausgebildet, eine zwischen Minimalwert und Maximalwert liegende Eingangsspannung die feste Einschaltspannung und die feste Haltespannung umzuwandeln, was unmittelbar durch den Aufbau des Gleichspannungswandlers oder durch eine Detektion einer Höhe der Eingangsspannung und einer entsprechenden Regelung gewährleistet werden kann.

Ein weiterer Aspekt der Erfindung betrifft eine elektromagnetische Haltebremse mit einer erfindungsgemäßen Steuerung.

Vorzugsweise weist eine solche Haltebremse eine Spule, eine Feder und eine Ankerplatte auf, wobei die Feder die Ankerplatte Druck beaufschlagt und von der Spule wegpresst.

Neben der Steuerung und der Haltebremse betrifft ein Aspekt der Erfindung zudem ein Verfahren zur Steuerung einer erfindungsgemäßen elektromagnetischen Haltebremse bzw. einer erfindungsgemäßen Steuerung. Die Eingangsspannung wird hierbei durch den Gleichspannungswandler für eine vorbestimmte Zeit auf die Einschaltspannung gewandelt und anschließend einem vorbestimmten Verlauf folgend auf die Haltespannung reduziert. Das Verfahren kann zudem der Steuerung einer elektromagnetischen Haltebremse mit einer gemäß den Unteransprüchen weitergebildeten Steuerung dienen.

Die vorbestimmte Zeit kann beispielsweise ein von der Bauform der Haltebremse abhängiger Wert sein. Alternativ kann das sichere Lösen der Bremse durch einen Sensor detektiert und nach dem sicheren Lösen die Einschaltspannung auf die Haltespannung herabgeregelt werden.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet.

## Patentansprüche

1. Steuerung für eine elektromagnetische Haltebremse mit einer Spule zum Lösen und Gelösthalten der Haltebremse, welche zum Gelösthalten eine Mindestbremsenspulenspannung benötigt,
aufweisend einen Gleichspannungswandler mit einem Eingang und einem Ausgang,
wobei der Gleichspannungswandler ausgebildet ist, eine am Eingang anliegende variable Eingangsspannung in eine am Ausgang bereitgestellte vorbestimmte Einschaltspannung und eine am Ausgang bereitgestellte vorbestimmte Haltespannung umzuwandeln,
wobei die Haltespannung der Mindestbremsenspulenspannung entspricht,
wobei der Gleichspannungswandler ausgebildet ist, eine 2-stufige Spannungssteuerung zu realisieren und in einer ersten Stufe die Einschaltspannung als geregelte DC-Spannung für eine vorbestimmte Zeit zu halten, die Spannung von der Einschaltspannung einem vorbestimmten Spannungsverlauf folgend auf die Haltespannung als geregelte DC-Spannung herunterzuregeln und in einer zweiten Stufe zu halten.

2. Steuerung nach Anspruch 1,
wobei die variable Eingangsspannung gleich oder höher ist als die Einschaltspannung und die Einschaltspannung höher ist als die Haltespannung.

3. Steuerung nach Anspruch 1 oder 2,
wobei der Gleichspannungswandler ausgebildet ist, unmittelbar eine geregelte DC-Spannung zu erzeugen und am Ausgang als Einschaltspannung und als Haltespannung bereitzustellen.

4. Steuerung nach einem der vorhergehenden Ansprüche,
wobei der Gleichspannungswandler ausgebildet ist, die Einschaltspannung kontinuierlich auf die Haltespannung herunterzuregeln.

5. Elektromagnetische Haltebremse mit einer Steuerung nach einem der vorhergehenden Ansprüche.

6. Verfahren zur Steuerung einer elektromagnetischen Haltebremse mit einer Spule zum Lösen und Gelösthalten der Haltebremse, welche zum Gelösthalten eine Mindestbremsenspulenspannung benötigt, und einer Steuerung gemäß einem der Ansprüche 1 bis 4,
wobei die Eingangsspannung durch den Gleichspannungswandler für eine vorbestimmte Zeit auf die Einschaltspannung gewandelt und anschließend einem vorbestimmten Verlauf folgend auf die Haltespannung reduziert wird.

## Claims

1. A control for an electromagnetic holding brake with a coil for releasing the holding brake and maintaining it in the released position, which requires a minimum brake coil voltage to maintain it in the released position,
having a DC-DC converter with an input and an output,
wherein the DC-DC converter is formed to convert a variable input voltage present at the input into a predetermined switch-on voltage provided at the output and a predetermined holding voltage provided at the output,
wherein the holding voltage corresponds to the minimum brake coil voltage, and
wherein the DC-DC converter is formed to implement a 2-stage voltage control and, in a first stage, to maintain the switch-on voltage as a regulated DC voltage for a predetermined time, to downregulate the voltage from the switch-on voltage following a predetermined voltage curve to the holding voltage as regulated DC voltage, and to maintain it in a second stage.

2. The control according to claim 1,
wherein the variable input voltage is equal to or higher than the switch-on voltage, and the switch-on voltage voltage is higher than the holding voltage.

3. The control according to claim 1 or 2,
wherein the DC/DC converter is designed to generate a regulated DC voltage directly and to provide it at the output as a switch-on voltage and as a holding voltage.

4. The control according to any one of the preceding claims,
wherein the DC/DC converter is formed to continuously downregulate the switch-on voltage to the holding voltage.

5. An electromagnetic holding brake with a control according to any one of the preceding claims.

6. A method for controlling an electromagnetic holding brake with a coil for releasing the holding brake and maintaining it in the released position, which requires a minimum brake coil voltage to maintain it in the released position, and a control according to any one of the claims 1 to 4,
wherein the input voltage is converted by the DC-DC converter for a predetermined time into the switch-on voltage and is subsequently reduced to the holding voltage following a predetermined profile.

## Revendications

1. Commande pour un frein de retenue électromagnétique, comprenant une bobine pour le desserrage et le maintien du desserrage du frein de retenue, qui nécessite une tension de bobine de frein minimale pour le maintien du desserrage,
présentant un convertisseur continu-continu pourvu d'une entrée et d'une sortie,
dans laquelle le convertisseur continu-continu est réalisé pour convertir une tension d'entrée variable appliquée à l'entrée en une tension de fermeture prédéterminée fournie à la sortie et en une tension de maintien prédéterminée fournie à la sortie,
dans laquelle la tension de maintien correspond à la tension de bobine de frein minimale,
dans laquelle le convertisseur continu-continu est réalisé pour créer une commande de tension à 2 niveaux et pour maintenir à un premier niveau la tension de fermeture comme une tension CC régulée pendant un temps prédéterminé, pour diminuer la tension en suivant une courbe de tension prédéterminée de la tension de fermeture jusqu'à la tension de maintien en tant que tension CC régulée et pour la maintenir à un deuxième niveau.

2. Commande selon la revendication 1,
dans laquelle la tension d'entrée variable est égale ou supérieure à la tension de fermeture, et la tension de fermeture est supérieure à la tension de maintien.

3. Commande selon la revendication 1 ou 2,
dans laquelle le convertisseur continu-continu est réalisé pour générer directement une tension CC régulée et pour la fournir à la sortie en tant que tension de fermeture et tension de maintien.

4. Commande selon l'une quelconque des revendications précédentes,
dans laquelle le convertisseur continu-continu est réalisé pour diminuer la tension de fermeture en continu jusqu'à la tension de maintien.

5. Frein de retenue électromagnétique, comprenant une commande selon l'une quelconque des revendications précédentes.

6. Procédé permettant de commander un frein de retenue électromagnétique avec une bobine pour le desserrage et le maintien du desserrage du frein de retenue, qui nécessite une tension de bobine de frein minimale pour le maintien du desserrage, et une commande selon l'une quelconque des revendications 1 à 4,
dans lequel la tension d'entrée est convertie par le convertisseur continu-continu pendant un temps prédéterminé en tension de fermeture et est ensuite réduite jusqu'à la tension de maintien en suivant une courbe prédéterminée.
